# EUROPÄISCHE PATENTSCHRIFT

(11) **EP 1 514 725 B1**
(45) Veröffentlichungstag und Bekanntmachung des Hinweises auf die Patenterteilung: **31.03.2010**
(21) Anmeldenummer: 04014089.9
(22) Anmeldetag: 16.06.2004
(51) Int. Cl.: B60N 2/22, B60N 2/02

(54) **Verstelleinrichtung für einen Rücksitz eines Fahrzeuges**
Adjusting arrangement for a rear seat of a vehicle
Mécanisme de réglage pour un siège arrière de véhicule

(30) Priorität: 10.09.2003 DE 10341643
(43) Veröffentlichungstag der Anmeldung: 16.03.2005
(73) Patentinhaber: Dr. Ing. h.c. F. Porsche AG, 70435 Stuttgart (DE)
(72) Erfinder: Kübler, Markus-Claus, 75328 Schömberg (DE); Paschek, Joachim, 75428 Illingen (DE); Baumgart, Claus, 71642 Ludwigsburg (DE); Fischer, Jan, 74321 Bietigheim-Bissingen (DE); Dittus, Jörg, 71691 Freiberg a.N. (DE)

(56) Entgegenhaltungen:
- EP-A- 0 211 248
- EP-A- 1 216 878
- DE-A1- 3 531 992
- FR-A- 2 524 285
- US-A- 2 064 536

## Beschreibung

Die Erfindung bezieht sich auf eine Verstelleinrichtung für einen Rücksitz eines Fahrzeugs nach dem Oberbegriff des Patentanspruchs 1.

Aus der DE 32 06 293 ist ein Fahrzeugsitz bekannt, der mit seiner Sitzlehne und seinem Sitzteil in eine vordere und hintere Position verschiebbar ist, wobei die Sitzlehne über einen Lenker verschwenk- und verstellbar zum Fahrzeugaufbau angeordnet ist. Das Sitzteil ist mit einem weiteren Lenker verbunden, über den eine Verschwenkung und eine Hochstellung des Sitzteils erfolgt.

Aus der DE 35 31 992 A1 ist eine Verstelleinrichtung für eine in der Neigung verstellbare Hintersitzanlage für ein Kraftfahrzeug bekannt, wobei diese eine Rückenlehne mit einem Sitzteil umfasst und die Rückenlehne ortsfest um einen aufbaufesten Drehpunkt schwenkbar gehalten wird. Die Verstellung der Rückenlehne erfolgt über eine Verstelleinrichtung, die aus einem Verstellzylinder oder einer Kulissenführung oder ein Zahnstangenverstellelement bestehen kann.

Des Weiteren ist aus der EP 12 16 878 A1 ein Fahrgastsitz für Personenbeförderungsfahrzeuge bekannt, bei der das Sitzelement verschiebbar auf einem Untergestell angeordnet ist und mittels einer Zwangssteuereinrichtung eine Verbindung mit der Rückenlehne aufweist, so dass bei einer Verschwenkung der Rückenlehne nach hinten eine Verschiebung des Sitzelements nach vorne erfolgt und bei einer Verschwenkung der Rückenlehne nach vorne eine Verschiebung des Sitzelements nach hinten erfolgt. Die Zwangssteuereinrichtung umfasst ein als Hebel ausgebildetes Antriebselement, welches einerseits mittels eines ersten Gelenks am Untergestell und andererseits mittels eines zweiten Gelenks an der Rückenlehne befestigt ist.

Die Aufgabe der Erfindung besteht darin, einen verschiebbaren Sitz, insbesondere Rücksitz für ein Kraftfahrzeug zu schaffen, der bei einer rohbaufest verriegelten Sitzlehne in mehrere Positionen verstellbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass trotz einer Schwenkbewegung der Sitzlehne um eine rohbaufeste Verriegelung das Sitzteil trotzdem eine lineare Bewegung auf einer Ebene durchführt. Dies wird erreicht, indem die Verstelleinrichtung ein Stellgetriebe mit einem mit der Sitzlehne verbundenen Kinematikhebel umfasst, der einerseits in einer ortsfesten Ankerplatte des Sitzes und andererseits in einem verschiebbaren Gestellelement des Sitzes zwangsgeführt ist. Hierdurch wird eine Bewegungssteuerung der Sitzlehne und des Sitzteiles unabhängig voneinander in der Weise erzielt, dass sich die Sitzlehne um einen Radius verschwenken kann und das Sitzteil sich linear verschiebt, ohne dass sich eine andere Höhe des Sitzteiles einstellt.

Zur Zwangsführung des Kinematikhebels in der ortsfesten Ankerplatte ist ein bogenförmiger Führungsschlitz für einen Führungsbolzen am Kinematikhebel vorgesehen und der Kinematikhebel ist mit dem Gestellelement des Sitzteils über einen Drehbolzen um eine Achse schwenkbar verbunden. Der Kinematikhebel ist mittels sich überschneidender Führungsschlitze im Kinematikhebel sowie im Gestellelement des Sitzteils über ein durch die Führungsschlitze greifendes Befestigungselement der Sitzlehne zu dieser und mit dieser verstellbar. Hierdurch können in vorteilhafter Weise die unterschiedlichen Bewegungsabläufe, wie die Linearbewegung des Sitzteiles und die Schwenkbewegung der Sitzlehne bei einem Verschiebevorgang des Sitzes voneinander getrennt werden.

Zu diesem Zweck sind die Führungsschlitze in einer hinteren Sitzendstellung zueinander unter einem Winkel angestellt, wobei der Führungsschlitz im Gestellelement etwa in einer vertikalen Ebene ausgerichtet ist und in der Sitzendstellung der weitere Führungsschlitz im Kinematikhebel etwa in einer horizontalen Ebene ausgerichtet ist.

Der Fahrzeugsitz ist hierdurch über das Stellgetriebe von einer hinteren Sitzstellung bis zu einer vorderen Sitzstellung kontinuierlich verschiebbar, derart, dass der Sitz über den Kinematikhebel linear in Pfeilrichtung bewegbar und die Sitzlehne schwenkbeweglich in Pfeilrichtung um den ortsfesten Verriegelungspunkt der Sitzlehne ausgeführt ist. Es wird hierdurch eine korrelierende Bewegung der Glieder des Stellgetriebes erzielt, ohne dass eine Blockade bei der Verschiebung des Sitzes auftritt. Eine Endposition des verschobenen Sitzes, sei es nach vorne oder nach hinten - in Fahrtrichtung des Fahrzeuges gesehen - ist erreicht, wenn in der hinteren Sitzendstellung der Führungsbolzen des Kinemaktikhebels am hinteren Ende - in Verschieberichtung des Sitzes gesehen - im bogenförmigen Führungsschlitz der ortsfesten Ankerplatte angeordnet ist und gleichzeitig das Befestigungselement der Sitzlehne im unteren Ende des etwa vertikal ausgerichteten Führungsschlitzes des Gestellelements und im vorderen Ende des Führungsschlitzes des Kinematikhebels angeordnet ist und der Führungsbolzen sowie das Befestigungselement in der vorderen Sitzendstellung jeweils in einer Position an gegenüberliegenden Enden der Führungsschlitze angeordnet ist.

Ein Ausführungsbeispiel der Erfindung ist in den Zeichnungen dargestellt und wird im Folgenden näher beschrieben.
Es zeigen
- Fig. 1: eine Prinzipdarstellung eines Fahrzeugsitzes in einer vorderen (strichpunktierte Linien) und in einer hinteren Position (ausgezogene Linien) - in Bezug auf die Fahrtrichtung des Fahrzeugs - gesehen im Fahrzeug dargestellt,
- Fig. 2: eine vergrößerte Darstellung eines Gestellelements mit integriertem Kinematikhebel und ortsfester Ankerplatte des Stellgetriebes,
- Fig. 3: die hintere Position des Fahrzeugsitzes,
- Fig. 4: eine mittlere Position des Fahrzeugsitzes,
- Fig. 5: die vordere Position des Fahrzeugsitzes,
- Fig. 6: eine schaubildliche Darstellung der hinteren Position des Fahrzeugsitzes und
- Fig. 7: eine schaubildliche Darstellung der vorderen Position des Fahrzeugsitzes.

Die Verstelleinrichtung für einen Fahrzeugsitz 1 umfasst im Wesentlichen ein Stellgetriebe 2 bestehend aus einem mit einem Gestellelement 3 des Sitzteils und einer ortsfesten Ankerplatte 4 zusammenwirkenden Kinematikhebel 5. Über dieses Stellgetriebe 2 kann der Sitz 1 von einer hinteren Sitzendposition I in eine vordere Sitzendposition II und Zwischenpositionen - in Bezug auf die Fahrtrichtung F - des Fahrzeugs verschoben werden. Bei dieser Sitzverschiebung bewegt sich das Sitzteil 6 linear in Pfeilrichtung A und die Sitzlehne 6a verschwenkt sich um einen festen Verriegelungspunkt 8 am Fahrzeugaufbau in Pfeilrichtung B um einen Radius R, welche von dem Verriegelungspunkt 8 ausgeht.

Der Kinematikhebel 5 des Stellgetriebes 2 ist über einen Drehbolzen 9 mit dem Gestellelement 3 verbunden, das mit dem Sitzteil 6 bzw. an einer Oberschiene verbunden ist. Des Weiteren ist der Kinematikhebel 5 über Befestigungselemente 10 der Sitzlehne 6a, welche endseitig eine Querstange 11 eines Sitzlehnengestells 12 aufweisen verschwenkbar verbunden.

Eine Zwangsführung in der ortsfesten Ankerplatte 4 des Sitzes 1 erfolgt mittels eines Führungsbolzens 13, der in einen bogenförmigen Führungsschlitz 14 eingreift. Weitere Führungsschlitze 15 , 16 im Gestellelement 3 des Sitzteils und im Kinematikhebel 5 überschneiden sich und in diesen weiteren Führungsschlitzen 15, 16 ist das Befestigungselement 10 verschiebbar bzw. zwangsgeführt angeordnet.

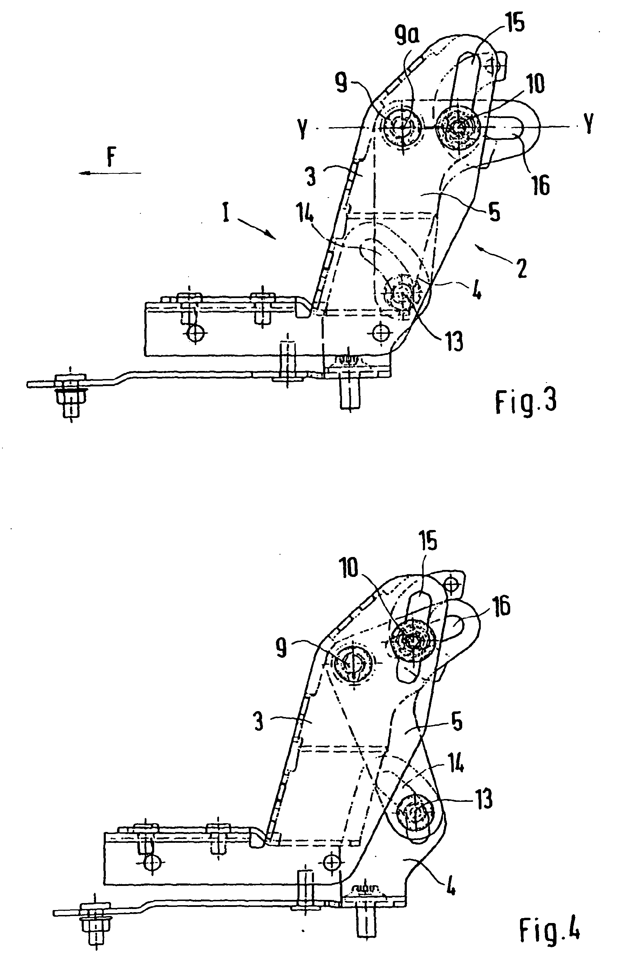

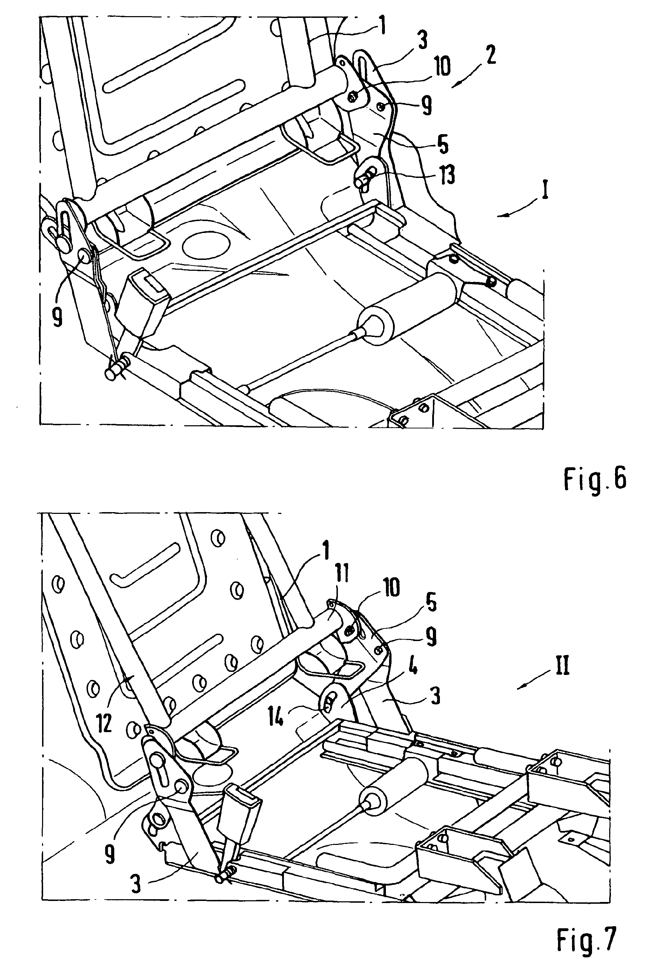

So ist in der hinteren Sitzendstellung I gem. der Fig. 3 und 6 der Führungsbolzen 13 - in Bezug auf die Fahrtrichtung F des Fahrzeugs gesehen - am unteren Ende des bogenförmigen Führungsschlitzes 14 angeordnet, wobei das Befestigungselement 10 der Sitzlehne 6a ebenfalls am unteren Ende des Führungsschlitzes 15 des Gestellelements 3 und am vorderen Ende - in Bezug auf die Fahrtrichtung F des Fahrzeugs gesehen - des Führungsschlitzes 16 des Kinematikhebels 5 angeordnet ist.

Der Führungsschlitz 15 im Gestellelement 3 ist als Längsschlitz ausgeführt und erstreckt sich etwa in einer vertikalen Ebene X-X, wogegen der weitere Führungsschlitz 16 auch als Längsschlitz ausgeführt ist und sich in der hinteren Sitzendstellung I etwa in einer horizontalen Ebene Y-Y erstreckt. Der Führungsschlitz 14 in der Ankerplatte 4 ist dagegen bogenförmig ausgebildet und ist als Kreisabschnitt ausgeführt.

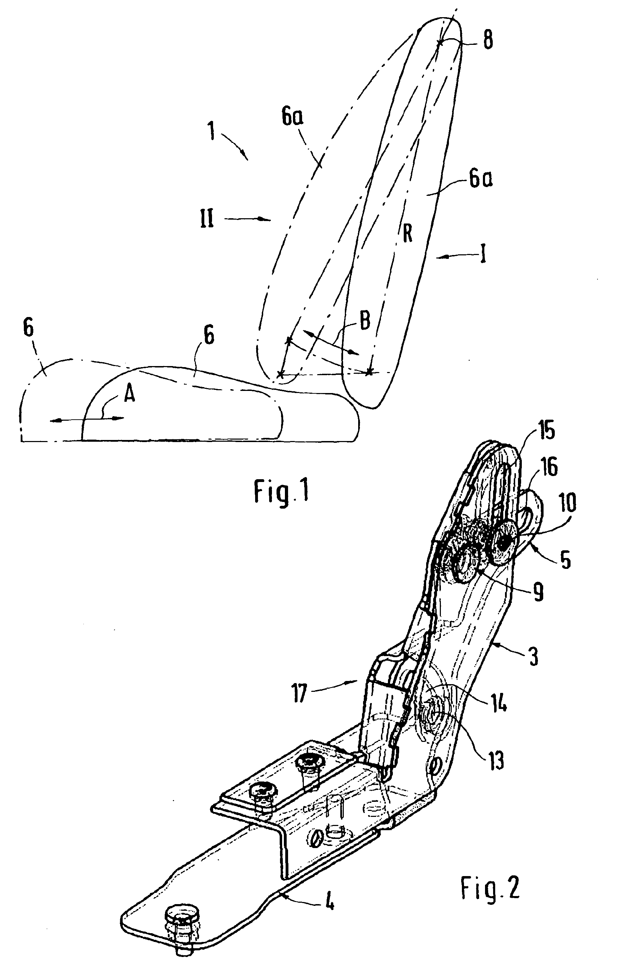

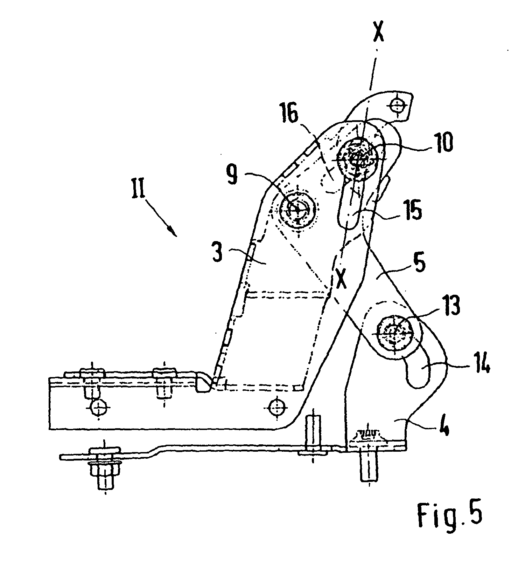

Bei einem Verstellen des Fahrzeugsitzes 1 von der Stellung I (Fig. 3) in die Stellung II (Fig. 5) wird das Sitzteil 6 in Pfeilrichtung A nach vorne in Fahrtrichtung F geschoben oder verfahren. Damit das Sitzteil 6 linear und die Sitzlehne 6a mit dem Radius R verschwenkt werden kann, führt quasi der Kinematikhebel 5 die Sitzlehne 6a in eine Schrägstellung, wobei das Sitzteil 6 eine gradlinige Bewegung durchführt, wie im Prinzipbild Fig. 1 näher dargestellt ist.

Zur beidseitigen flächigen Abstützung des Kinematikhebels 5 ist dieser in einem Kinematikgehäuse 17 gem. Fig. 2 angeordnet, wobei die Ankerplatte 4 mit dem Kurvenschlitz 14 in das Gehäuse 17 hineinragt.

## Patentansprüche

1. Verstelleinrichtung für einen Rücksitz eines Fahrzeugs zum Einstellen einer in einem Verriegelungspunkt des Fahrzeugaufbaus schwenkbar gehaltenen Sitzlehne (6a) und einen mit dieser Sitzlehne verbundenen verstellbaren Sitzteil (6), **dadurch gekennzeichnet, dass** die Verstelleinrichtung ein Stellgetriebe (2) mit einem mit der Sitzlehne (6a) über ein Befestigungselement (10) verbundenen Kinematikhebel (5) umfasst, der einerseits in einer ortsfesten Ankerplatte (4) des Sitzes (1) und andererseits in einem verschiebbaren Gestellelement (3) des Sitzteils (6) des Sitzes (1) zwangsgeführt ist, wobei der Kinematikhebel (5) über einen Drehbolzen (9) am Gestellelement (3) ortsfest gehalten ist und dass der Kinematikhebel (5) mit dem Gestellelement (3) über den Drehbolzen (9) um eine Achse (9a) des Drehbolzens (9) schwenkbar verbunden ist und mittels sich überschneidender Führungsschlitze (15. 16) im Kinematikhebel (5) sowie im Gestellelement (3) des Sitzteils (6) durch das in beide Führungsschlitze (15, 16) eingreifende Befestigungselement (10) der Sitzlehne (6a) zur Sitzlehne (6a) und mit dieser verstellbar ist und dass zur Zwangsführung des Kinematikhebels (5) in der ortsfesten Ankerplatte (4) ein bogenförmiger Führungsschlitz (14) für einen Führungsbolzen (13) im Kinematikhebel (5) vorgesehen ist.

2. Einrichtung nach Anspruch 1, **dadurch gekennzeichnet, dass** der Kinematikhebel (5) und die ortsfeste Ankerplatte (4) in einem Gehäuse (17) des Gestellelements (3) angeordnet sind.

3. Einrichtung nach Anspruch 1, **dadurch gekennzeichnet, dass** die beiden Führungsschlitze (15, 16) in einer hinteren Sitzendstellung (I) zueinander unter einem Winkel angestellt sind, wobei der Führungsschlitz (15) im Gestellelement (3) etwa in einer vertikalen Ebene (X-X) ausgerichtet ist und in der hinteren Sitzendstellung (I) des Sitzes (1) der weitere Führungsschlitz (16) im Kinematikhebel (5) etwa in einer horizontalen Ebene (Y-Y) ausgerichtet ist.

4. Einrichtung nach einem der vorhergehenden Ansprüche, **dadurch gekennzeichnet, dass** der Fahrzeugsitz (1) über das Stellgetriebe (2) von einer hinteren Sitzendstellung (I) bis zu einer vorderen Sitzendstellung(II) verschiebbar ist, derart, dass das Sitzteil (6) des Sitzes (1) über den Kinematikhebel (5) linear in Pfeilrichtung (A) bewegbar und die Sitzlehne (6a) schenkbeweglich in Pfeilrichtung (B) um den ortsfesten Verriegelungspunkt (9) der Sitzlehne (6a) ausgeführt ist.

5. Einrichtung nach einem der vorhergehenden Ansprüche, **dadurch gekennzeichnet, dass** in der hinteren Sitzendstellung (I) der Führungsbolzen (13) des Kinematikhebels (5) am hinteren Ende - in Verschieberichtung des Sitzes (I) gesehen - im bogenförmigen Führungsschlitz (14) der ortsfesten Ankerplatte (4) angeordnet ist und gleichzeitig das Befestigungselement (10) der Sitzlehne (6a) im unteren Ende des etwa vertikal ausgerichteten Führungsschlitzes (15) des Gestellelements (3) und im vorderen Ende des Führungsschlitzes (16) - in Verschieberichtung des Sitzes (1) gesehen - des Kinematikhebels (5) angeordnet ist und der Führungsbolzen (13) sowie das Befestigungselement (10) in der vorderen Sitzendstellung (II) jeweils in einer Position am gegenüberliegenden Ende der Führungsschlitze (14) und (16) angeordnet sind.

## Claims

1. Adjusting arrangement for a rear seat of a motor vehicle for adjusting a seat back (6a), which is pivotably held in a locking point of the vehicle body, and an adjustable seat part (6) which is connected to said seat back, **characterized in that** the adjusting arrangement comprises an actuating mechanism (2) with a kinematic lever (5) connected by means of a fastening element (10) to the seat back (6a), which kinematic lever (5) is positively guided at one side in a positionally fixed anchor plate (4) of the seat (1) and at the other side in a movable frame element (3) of the seat part (6) of the seat (1), with the kinematic lever (5) being positionally fixedly held on the frame element (3) by means of a rotary bolt (9), and **in that** the kinematic lever (5) is connected to the frame element (3) by means of the rotary bolt (9) so as to be pivotable about an axis (9a) of the rotary bolt (9) and said kinematic lever (5) can be adjusted with respect to and with the seat back (6a) by way of intersecting guide slots (15, 16) in the kinematic lever (5) and in the frame element (3) of the seat part (6) by means of the fastening element (10), which engages into both guide slots (15, 16), of the seat back (6a), and **in that**, for the positive guidance of the kinematic lever (5) in the positionally fixed anchor plate (4), a curved guide slot (14) is provided for a guide bolt (13) in the kinematic lever (5).

2. Arrangement according to Claim 1, **characterized in that** the kinematic lever (5) and the positionally fixed anchor plate (4) are arranged in a housing (17) of the frame element (3).

3. Arrangement according to Claim 1, **characterized in that** the two guide slots (15, 16) are inclined at an angle with respect to one another in a rear seat end position (I), with the guide slot (15) in the frame element (3) being aligned approximately in a vertical plane (X-X) and, in the rear seat end position (I) of the seat (1), the further guide slot (16) in the kinematic lever (5) being aligned approximately in a horizontal plane (Y-Y).

4. Arrangement according to one of the preceding claims, **characterized in that** the vehicle seat (1) can be moved by means of the actuating mechanism (2) from a rear seat end position (I) to a front seat end position (II), in such a way that the seat part (6) of the seat (1) can be moved linearly in the arrow direction (A) by means of the kinematic lever (5) and the seat back (6a) is formed so as to be pivotable in the arrow direction (B) about the positionally fixed locking point (9) of the seat back (6a).

5. Arrangement according to one of the preceding claims, **characterized in that**, in the rear seat end position (I), the guide bolt (13) of the kinematic lever (5) is arranged at the rear end - as viewed in the movement direction of the seat (1) - in the curved guide slot (14) of the positionally fixed anchor plate (4), and at the same time, the fastening element (10) of the seat back (6a) is arranged at the lower end of the approximately vertically aligned guide slot (15) of the frame element (3) and at the front end of the guide slot (16) - as viewed in the movement direction of the seat (1) - of the kinematic lever (5), and, in the front seat end position (II), the guide bolt (13) and the fastening element (10) are arranged in each case in a position at the opposite end of the guide slots (14) and (16).

## Revendications

1. Dispositif de réglage pour un siège arrière de véhicule pour régler un dossier de siège (6a) maintenu de façon pivotante dans un point de verrouillage de la structure du véhicule et une partie de siège (6) mobile reliée à ce dossier de siège, **caractérisé en ce que** le dispositif de réglage comprend un mécanisme de réglage (2) avec un levier cinématique (5) relié au dossier de siège (6a) par l'intermédiaire d'un élément de fixation (10), ledit dispositif de réglage étant introduit de force d'un côté dans une plaque d'ancrage (4) fixe sur place du siège (1) et de l'autre côté dans un élément de châssis (3) coulissant de la partie de siège (6) du siège (1), le levier cinématique (5) étant maintenu fixement sur place à l'élément de châssis (3) par l'intermédiaire d'un boulon pivot (9) et le levier cinématique (5) étant relié de façon pivotante à l'élément de châssis (3) par l'intermédiaire du boulon pivot (9) autour d'un axe (9a) du boulon pivot (9) et à l'aide de fentes de guidage (15, 16) se croisant dans le levier cinématique (5) ainsi que dans l'élément de châssis (3) de la partie de siège (6) à travers l'élément de fixation (10) du dossier de siège (6a) s'engrenant dans les deux fentes de guidage (15, 16) en direction du dossier de siège (6a) et réglables avec elles et **en ce que** pour le guidage contraint du levier cinématique (5) dans la plaque d'ancrage (4) fixe sur place, une fente de guidage (14) en forme d'arc est prévue dans le levier cinématique (5) pour un boulon de guidage (13).

2. Dispositif selon la revendication 1, **caractérisé en ce que** le levier cinématique (5) et la plaque d'ancrage (4) fixe sur place sont disposés dans un boîtier (17) de l'élément de châssis (3).

3. Dispositif selon la revendication 1, **caractérisé en ce que** les deux fentes de guidage (15, 16) sont disposées selon un certain angle l'une par rapport à l'autre dans une position terminale de siège (I) arrière, la fente de guidage (15) étant orientée dans l'élément de châssis (3) quelque peu dans un plan vertical (X-X) et **en ce que** dans la position terminale de siège (I) arrière du siège (1), l'autre fente de guidage (16) est orientée dans le levier cinématique (5) quelque peu dans un plan horizontal (Y-Y).

4. Dispositif selon l'une quelconque des revendications précédentes, **caractérisé en ce que** le siège de véhicule (1) peut être déplacé d'une position terminale de siège (I) arrière jusque dans une position terminale de siège (II) avant par l'intermédiaire du mécanisme de réglage (2), de telle sorte que la partie de siège (6) du siège (1) peut être déplacée de façon linéaire dans la direction de la flèche (A) par l'intermédiaire du levier cinématique (5) et que le dossier de siège (6a) est réalisé de façon mobile en pivotement dans la direction de la flèche (B) autour du point de verrouillage (9) fixe sur place du dossier de siège (6a).

5. Dispositif selon l'une quelconque des revendications précédentes, **caractérisé en ce que** dans la position terminale de siège (I) arrière, le boulon de guidage (13) du levier cinématique (5) est disposé au niveau de l'extrémité arrière - vue dans la direction de déplacement du siège (I) - dans la fente de guidage (14) en forme d'arc de la plaque d'ancrage (4) fixe sur place et qu'en même temps, l'élément de fixation (10) du dossier de siège (6a) est disposé dans l'extrémité inférieure de la fente de guidage (15) quelque peu verticale de l'élément de châssis (3) et dans l'extrémité avant de la fente de guidage (16) - vue dans la direction de déplacement du siège (1) - du levier cinématique (5) et **en ce que** le boulon de guidage (13) et l'élément de fixation (10) sont disposés dans la position terminale de siège (II) avant respectivement dans une position située au niveau de l'extrémité opposée des fentes de guidage (14) et (16).
